# EUROPEAN PATENT APPLICATION

(11) **EP 3 919 214 A1**
(43) Date of publication of application: **08.12.2021**
(21) Application number: 21174790.2
(22) Date of filing: 19.05.2021
(51) Int. Cl.: B23K 9/12, B23K 9/133

(54) **WIRE FEEDER AND SUITCASE SPOOL CARRIER**

(30) Priority: 02.06.2020 US 202016890699
(71) Applicant: Illinois Tool Works, Inc., Glenview, Illinois 60025 (US)
(72) Inventor: BROWN, Erik Robert, Illinois, 60025 (US)
(74) Representative: HGF

(57) **Abstract**

Disclosed is a system for feeding welding wire for welding-type applications. The system includes a welding wire feeder and a separate wire source including a wire source housing. The wire source is connectable to and disconnectable from the wire feeder.

## Description

### BACKGROUND

In some welding-type applications, a welding wire feeder may be used to feed welding wire from a wire spool to a welding torch for a welding operation. In some welding-type operations, it may be desirable for welding wire feeders to be portable. In some welding-type operations, it may be desirable to easily replace wire spools and/or change between different types of wire.

### SUMMARY

The present disclosure relates generally to welding systems and, more particularly, to welding wire feeders and welding wire feeder systems, substantially as illustrated by and described in connection with at least one of the figures, as set forth more completely in the claims.

### DRAWINGS

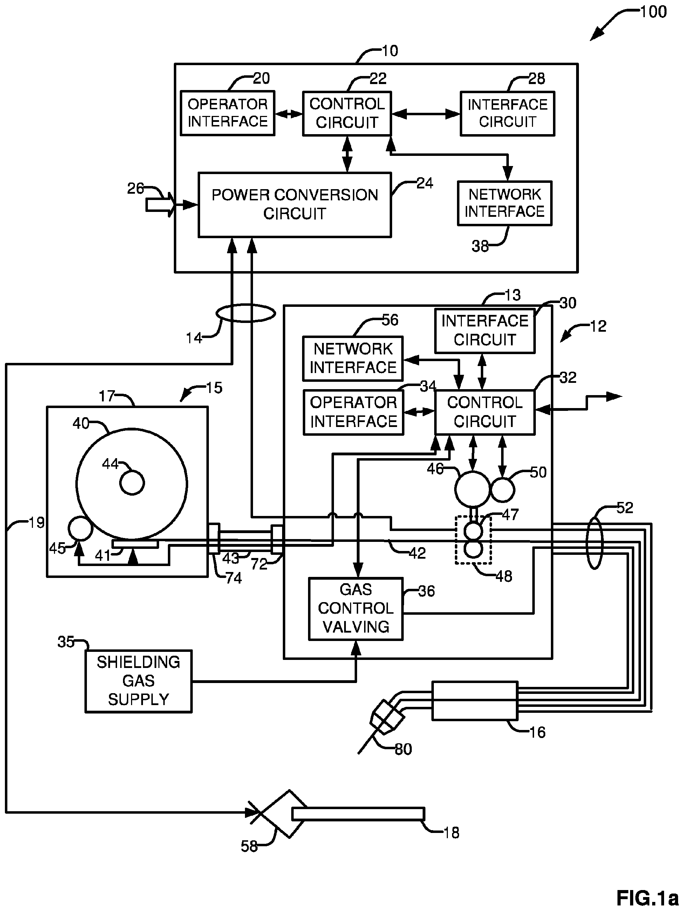

FIG. 1a illustrates a welding-type system employing a portable wire feeder and a portable wire feeder source.

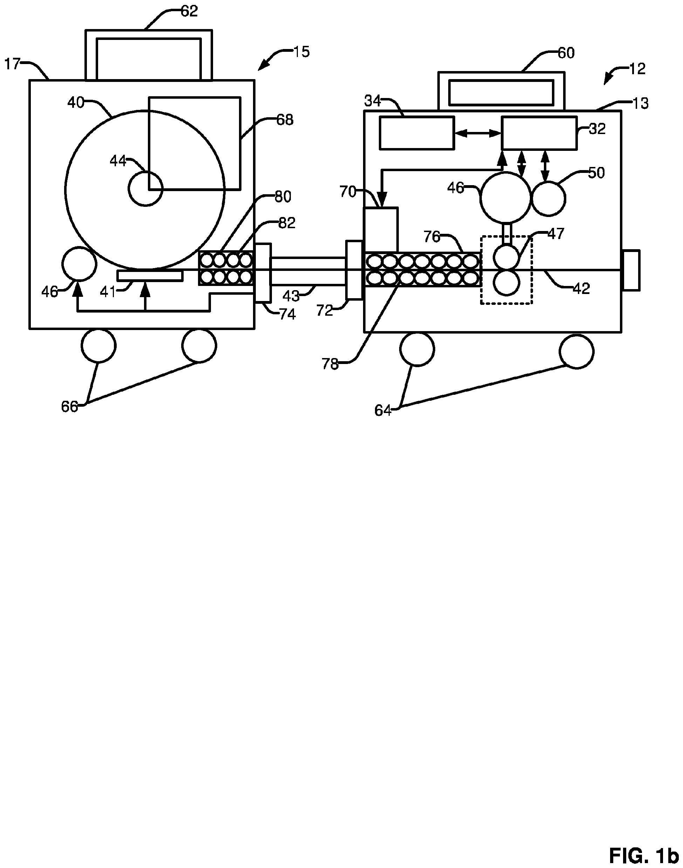

FIG. 1b illustrates the portable wire feeder and the portable wire source of the welding-type system of FIG. 1a.

The figures are not necessarily to scale. Where appropriate, similar or identical reference numbers are used to refer to similar or identical components.

### DETAILED DESCRIPTION

In some welding-type operations, such as gas metal arc welding (GMAW), welding wire may be fed by a wire feeder to a torch for a welding operation. In some applications or work sites, it may be desirable to move the wire feeder to different locations at the work site in order to avoid driving the wire from the wire feeder to the torch over a long distance. Therefore, it is desirable for wire feeders to be portable. Conventional systems may use portable "suitcase" wire feeders. Conventional suitcase wire feeders include a wire spool hub, a wire spool, and the drive components enclosed within a common housing. Example suitcase wire feeders are generally described in U.S. Patent Application Publication No. 2011/0114613, titled "Compact Welding Wire Feeder," by Jeffery Ray Ihde et. al. The entirety of U.S. Patent Application Publication No. 2011/0114613 is incorporated herein by reference.

The portability of wire feeders is typically limited by the ability of a welding operator or other personnel to physically carry the wire feeder. As a result, wire feeder portability may be limited by the weight of the spool and the drive components. Therefore, conventional suitcase feeders are not typically designed to use relatively large spools of welding wire, for example fifty or sixty pound spools of wire. Some industries, such as certain construction sites, rail, mining, and off-shore sites use such relatively large spools of wire, and therefore do not use conventional suitcase feeders. With larger spools of wire, wire feeders are typically relatively stationary given their high weight.

The present disclosure relates to a wire feeder system that includes a separate enclosure for a spool of wire (e.g., a fifty or sixty pound spool of welding wire). The enclosure for the spool of wire is separate from and connectable to a portable wire feeder. The portable wire feeder may be significantly lighter than a conventional wire feeder, because the spool of wire is separated from the drive components. Accordingly, both the enclosure for the spool of wire and the wire feeder are easily portable. Additionally, new spools can be conveniently replaced when a welding spool is exhausted. Additionally, the wire feeder may include a more powerful feed motor as compared to a conventional suitcase feeder, because the portability of the wire feeder is not constrained by the weight of the spool, and therefore a larger motor may be included within the wire feeder without exceeding threshold weight limits of portability. Therefore, the wire feeder of the present disclosure may feed wires of a larger diameter as compared to conventional suitcase wire feeders.

Disclosed example portable wire feeders include: a first case; a connector configured to connect to a second case of a wire source, wherein the second case is physically independent from the first case; one or more drive rolls within the first case, the one or more drive rolls configured to drive wire to a welding torch; and a wire guide configured to guide wire received from the wire source via the connector to the one or more drive rolls.

In some example portable wire feeders, the connector is configured to connect to the second case via a conduit.

In some example portable wire feeders, the connector is configured to directly connect to the second case.

In some example portable wire feeders, the wire guide includes a plurality of ball bearings.

In some example portable wire feeders, the wire feeder is configured to receive 1/8 inch wire from the wire source.

Disclosed example portable wire spool housings include: a first case; a spool support within the case, the spool support configured to support a spool of welding wire and to enable the spool to rotate to pay out the welding wire from the spool; an outlet to enable welding wire to be withdrawn from the first case by a portable wire feeder physically independent of the wire spool housing; and a wire guide configured to guide welding wire from a welding wire spool supported on the spool support to the outlet.

In some example portable wire spool housings, the outlet includes a connector configured to connect to the portable wire feeder.

In some example portable wire spool housings, the connector is configured to connect to the portable wire feeder via a conduit.

In some example portable wire spool housings, the connector is configured to directly connect to the second case.

In some example portable wire spool housings, the spool support is configured to support a sixty pound spool of welding wire.

In some example portable wire spool housings, the wire guide is configured to guide 1/8 inch wire.

In some example portable wire spool housings, the case includes a plurality of wheels.

In some example portable wire spool housings, the first case does not include a motor.

Disclosed example wire feeding systems include: a wire source housing including: a first case; a spool support within the case configured to support a welding wire spool; a first connector; and a first wire guide configured to guide welding wire from a welding wire spool supported on the spool support to the connector; and a wire feeder comprising: a second case; a second connector configured to connect to the first connector; and one or more drive rolls within the case, the one or more drive rolls configured to drive wire to a welding torch; and a second wire guide configured to guide welding wire received from the wire source housing via the second connector to the one or more drive rolls.

In some example wire feeding systems, the first wire guide and the second wire guide are configured to guide 1/8 inch wire.

In some example wire feeding systems, the first connector is configured to directly connect to the second connector.

In some example wire feeding systems, each of the first wire guide and the second wire guide include a plurality of ball bearings.

In some example wire feeding systems, the wire source housing comprises a plurality of wheels.

In some example wire feeding systems, the spool support is configured to support a sixty pound spool of wire.

The term "welding-type system," as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the term "welding-type power" refers to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit" and "control circuitry," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards, that form part or all of a controller, and are used to control a welding process, a device such as a power source or wire feeder, motion, automation, monitoring, air filtration, displays, and/or any other type of welding-related system.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), flash memory, solid state storage, a computer-readable medium, or the like.

As used herein, the term "torch," "welding torch," "welding tool" or "welding-type tool" refers to a device configured to be manipulated to perform a welding-related task, and can include a hand-held welding torch, robotic welding torch, gun, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), spray, short circuit, and/or any other type of welding process.

FIG. 1a illustrates an example welding system 100 for performing welding-type operations. As shown in the welding system 100 of FIG. 1a, a power supply 10 and a wire feeder 12 are coupled via conductors or conduits 14. In the illustrated example, the power supply 10 is separate from the wire feeder 12, such that the wire feeder 12 may be positioned near a welding location at some distance from the power supply 10. Terminals are typically provided on the power supply 10 and on the wire feeder 12 to allow the conductors 14 or conduits to be coupled to the systems so as to allow for power and gas to be provided to the wire feeder 12 from the power supply 10, and to allow data to be exchanged between the two devices.

The system 100 is configured to provide wire from a welding wire source 15, power from the power supply 12, and shielding gas from a shielding gas supply 35, to a welding torch 16. The torch 16 may be any type of arc welding torch, (e.g., GMAW, GTAW, FCAW, SMAW) and may allow for the feed of a welding wire 42 (e.g., an electrode wire) and gas to a location adjacent to a workpiece 18. A work cable 19 is run to the welding workpiece 18 so as to complete an electrical circuit between the power supply 10 and the workpiece 18.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the example system 100 is configured to allow for welding with various steels, aluminums, or other welding wire that is channeled through the torch 16. Further, the system 100 is configured to employ welding wires with a variety of wire sizes. These weld settings are communicated to a control circuit 22 within the power supply 10. The system may be particularly adapted to implement welding regimes configured for certain electrode types.

The control circuit 22, operates to control generation of welding power output that is supplied to the welding wire 42 for carrying out the desired welding operation.

The torch 16 applies power from the power supply 10 to the wire electrode 42, typically by a welding cable 52. Similarly, shielding gas from a shielding gas supply 35 is fed through the wire feeder 12 and the welding cable 52. During welding operations, the welding wire 42 is advanced through a jacket of the welding cable 52 towards the torch 16.

The work cable 19 and clamp 58 allow for closing an electrical circuit from the power supply 10 through the welding torch 16, the electrode (wire) 42, and the workpiece 18 for maintaining the welding arc during the operation.

The control circuit 22 is coupled to power conversion circuit 24. This power conversion circuit 24 is adapted to create the output power, such as pulsed waveforms applied to the welding wire 42 at the torch 16. Various power conversion circuits may be employed, including choppers, boost circuitry, buck circuitry, inverters, converters, and/or other switched mode power supply circuitry, and/or any other type of power conversion circuitry. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply 10 illustrated in FIG. 1a may also include an interface circuit 28 configured to allow the control circuit 22 to exchange signals with the wire feeder 12.

The wire feeder 12 includes a complimentary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both. Additionally or alternatively, the interface circuit 30 and the interface circuit 28 may communicate wirelessly and/or via the weld cable.

The wire feeder 12 also includes control circuit 32 coupled to the interface circuit 30. As described below, the control circuit 32 allows for wire feed speeds to be controlled in accordance with operator selections or stored sequence instructions, and permits these settings to be fed back to the power supply via the interface circuit. The control circuit 32 is coupled to an operator interface 34 on the wire feeder that allows selection of one or more welding parameters, particularly wire feed speed. The operator interface may also allow for selection of such weld parameters as the process, the type of wire utilized, current, voltage or power settings, and so forth. The control circuit 32 may also be coupled to gas control valving 36 which regulates and measures the flow of shielding gas from the shielding gas supply 35 to the torch 16. In general, such gas is provided at the time of welding, and may be turned on immediately preceding the weld and for a short time following the weld. The shielding gas supply 35 may be provided in the form of pressurized bottles.

The wire feeder 12 includes components for feeding wire to the welding tool 16 and thereby to the welding operation, under the control of control circuit 32. As illustrated, the drive components and control components of the wire feeder 12 are included within a first housing or enclosure 13. A spool of wire 40 is mounted on a spool hub 44 in a second housing or enclosure 17. The wire source 15 is physically independent from the wire feeder 12. In other words, as explained in more detail below, the wire source 15 is connectable to and disconnectable from the wire feeder 12, and the wire source 15 can be physically moved independently from the wire feeder 12.

In some examples, the spool hub 40 is configured to support up to a sixty pound spool of wire and the enclosure 17 is large enough to enclose a sixty pound spool of wire. In some examples, the spool hub 40 is configured to support up to a fifty pound spool of wire and the enclosure 17 is large enough to enclose a fifty pound spool of wire. An inlet 72 of the wire feeder 12 is connected to an outlet 74 of the wire source 15 via one or more connectors 43. In some examples, the wire feeder inlet 72 is directly connected to the wire source outlet 74. For example, the wire feeder inlet 72 may include a first connector that directly connects to a second connector of the wire source outlet 74. For example, the wire feeder inlet 72 may connect to the wire source outlet 74 via quick disconnect connectors or the like through which wire from the spool 40 may be fed. Suitable example quick disconnects are sold by Wire Wizard. In some examples, a conduit may connect the wire feeder inlet 72 to the wire source outlet 74. In some examples, the counduit is flexible (e.g., similar to a weld cable). In some examples the conduit may be a rigid conduit. The connectors 43 enable welding wire 42 from the spool 40 to be fed to the drive components of the wire feeder 12. The connectors 43 may also enable one or more control cables to be connected from components within the wire source enclosure 17 to the control circuit 32.

Welding wire 42 is unspooled from the spool 40 and is progressively fed to the torch 16. The spool 40 may be associated with a clutch 45 that disengages the spool 40 when wire is to be fed from the spool 40 to the torch 16. The clutch 45 may also be regulated, for example by the control circuit 32, to maintain a minimum friction level to avoid free spinning of the spool 40. The first wire feeder motor 46 may be provided within a housing 48 that engages with wire feed rollers 47 to push wire from the wire feeder 12 towards the torch 16.

In practice, at least one of the rollers 47 is mechanically coupled to the motor 46 and is rotated by the motor 46 to drive the wire from the wire feeder 12, while the mating roller is biased towards the wire to apply adequate pressure by the two rollers to the wire. Some systems may include multiple rollers of this type. In some examples, the wire feeder 12 is configured to feed 1/8 inch wire. In some examples, the wire feeder 12 is configured to feed 3/32 inch wire.

A tachometer 50 or other sensor may be provided for detecting the speed of the first wire feeder motor 46, the rollers 47, or any other associated component so as to provide an indication of the actual wire feed speed. Signals from the tachometer 50 are fed back to the control circuit 32 such that the control circuit 32 can track the length of wire that has been fed. The length of wire may be used directly to calculate consumption of the wire and/or the length may be converted to wire weight based on the type of wire and its diameter.

When a spool 40 is installed, an operator may input information about the spool 40, for example via the operator interface 34. The control circuit 32 may receive this information and determine an initial amount of wire able to be fed from the spool 40, for example by weight or by length of wire. For example, the operator may input a spool serial number, and the control circuit 32 may determine a weight or length of wire by looking up the spool type in memory of the control circuit 32 or in an external database. In some examples, the user may input weight or wire length information and/or wire type information into the operator interface 34. The control circuit 32 can then track consumption of the wire, for example based on signals received from the tachometer 50.

The control circuit 32 may control the operator interface 34 to indicate when an amount of wire remaining in the spool 40 is less than a threshold amount. An operator may then be aware that the spool 40 should be replaced soon. In some examples, the operator interface 34 may display an amount of wire (e.g., by weight or length) remaining in the spool. In some examples, the control circuit 32 may send a command to stop or disable a welding operation when an amount of wire remaining in the spool 40 is less than a threshold amount.

In some examples, the wire source 15 includes a sensor 41 to determine an amount of wire remaining in the spool 40. For example, the sensor 41 may be a scale to measure the weight of the wire spool 40. Signals from the scale 41 are fed back to the control circuit 32 such that the control circuit 32 can track a consumption of welding wire by weight. As described above, the operator interface 34 may display an amount of wire remaining in the spool 40 (e.g., by weight or length) and/or indicate when an amount of wire remaining in the spool 40 is less than a threshold amount. In some examples, the control circuit 32 may send a command to stop or disable a welding operation when an amount of wire remaining in the spool 40 is less than a threshold amount. In some examples, rather than a scale, the sensor 41 may be a light sensor which measures approximately how much wire is left in the spool. In some examples, a light sensor may determine when an amount of wire remaining on the spool is less than a threshold amount. In some examples, multiple light sensors may be used to determine when the amount of wire remaining is at various threshold amounts.

FIG. 1b is illustrates an example implementation of the wire feeder 12 and wire feeder source 15 of the welding-type system 100 of FIG. 1a.

As illustrated, each of the wire feeder housing 13 and the wire source housing 17 may include a handle (60 and 62 respectively) and a plurality of wheels (64 and 66, respectively). The wheels (64 and 66) may include braking or locking mechanisms (e.g., one or more wheels may be locking casters).

The wire source housing 17 may include a viewing window 68. The viewing window may be made of a transparent or translucent material such than an operator can view the wire spool 40 when the housing 17 is closed. As an operator can view the spool 40 through the window 68, an operator is able to view the amount of wire remaining on the spool 40.

In some examples, the wire feeder 12 may include a sensor 70 which detects when a wire source 15 is connected to the wire feeder 12. For example, the sensor 70 may be a radio frequency identification ("RFID") reader which reach a RFID tag on the spool 40 or the wire source housing 17. The RFID reader 70 may receive information about the spool, for example a wire type, wire length, or wire weight. The information is sent to the control circuit 32. The control circuit 32 may track a consumption of the spool 40 based on the initial information received from the sensor 70 and/or monitoring use of the wire. The control circuit 32 may adjust one or more settings of the wire feeder 12 based on the wire type information. The control circuit 32 may also transmit the received wire type information to the power supply 10 (e.g., via the interface circuit 30). The control circuit 22 of the power supply 10 may then adjust one or more settings of the power supply 10 based on the received wire type. In some examples, the control circuit 32 of the wire feeder 12 or the control circuit 22 of the power supply 10 may determine whether a selected welding process or selected weld settings are compatible with the received wire type. In some examples, the operator interface (20 or 34) may indicate that the received wire type is not compatible with the selected welding process or selected weld settings. Other possible wireless technologies that the sensor 70 may use include Bluetooth, Bluetooth low energy, near field communication, ZigBee, RuBee, or the like.

As illustrated, the wire feeder 12 includes a wire guide 76 connected to the inlet 72 of the wire feeder 12. The wire guide 76 guides wire received at the inlet 72 to the drive roll(s) 47. In some examples, the wire guide 76 may include a plurality of ball bearings 78. The wire source 15 also includes a wire guide 80. The wire guide 80 is configured to guide wire from the spool 40 to the outlet 74. In some examples, the wire guide 80 may include a plurality of ball bearings 82. In some examples, the wire guides (76 and 80) are configured to guide 1/8 inch wire. In some examples, the wire guides (76 and 80) are configured to guide 3/32 inch wire.

As the wire source 15 is connectable to the wire feeder 12, a new wire source 15 can be connected to the wire feeder 12 when the wire from the spool 40 is spent, or if a maintenance issue occurs with the wire source 15. For example, when the spool 40 is spent, an operator may disconnect the wire source 15 from the wire feeder 12 (e.g., disconnect the quick disconnect connector) and connect a new wire source 15 to the wire feeder 12. Connecting a new wire source 15 to the feeder may include manually feeding wire from the spool 40 through the connector 43, the inlet 72, and the wire guide 76 to the drive rolls 47 of the wire feeder 12. Additionally, an operator may place a new wire spool 40 in the wire source 15 when an old wire spool 40 is spent. To replace a spool 40 in the wire source 15, an operator manually feeds wire from the new spool 40 through the wire guide 80 and the outlet 74.

In some examples, an operator may have multiple wire sources (15), and can quickly replace one wire source with another when the wire spool 40 is spent. In some examples, the wire source housings 17 are stackable (e.g., multiple housings 17 can be stacked on top of each other), thereby minimizing space taken up by the multiple wire sources. In some examples, an operator can quickly switch from one wire source to another wire source (e.g., disconnect one wire source 15 from the wire feeder 12 and connect a different wire source 15). In some examples, the wire spool 40 may be locked in place on the hub 44. For example, a locking mechanism may prevent the spool 40 from spinning on the hub (e.g., which may occur without a locking mechanism when the wire source 15 is moved) except for when an operator manually feeds wire through the guide 80 or when the drive components of the feeder pull the wire through the guide 80.

In some examples, different wire sources 15 may include different wire types (e.g., wire size or material). For example, an operator may have two or more wire sources 15, each with a different wire type. Various welding operations may require the use of a different wire type. For example, one operation may require 1/8 inch wire while a second operation may require 3/32 inch wire. An operator may connect the wire source 15 including the appropriate wire type for the particular operation to the wire feeder 12. Then, when the operator performs a different second welding operation that requires a different wire type, the operator can disconnect the first wire source 15 from the wire feeder and connect a second wire source 15 to the wire feeder 12 that includes the appropriate wire type for the second welding operation.

The present methods and systems may be realized in hardware, software, and/or a combination of hardware and software. Example implementations include an application specific integrated circuit and/or a programmable control circuit. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

Certain implementations are described in the following numbered clauses:
Clause 1. A portable wire feeder comprising:
   a first case;
   a connector configured to connect to a second case of a wire source, wherein the second case is physically independent from the first case;
   one or more drive rolls within the first case, the one or more drive rolls configured to drive wire to a welding torch; and
   a wire guide configured to guide wire received from the wire source via the connector to the one or more drive rolls.
Clause 2. The wire feeder of clause 1, wherein the connector is configured to connect to the second case via a conduit.
Clause 3. The wire feeder of clause 1, wherein the connector is configured to directly connect to the second case.
Clause 4. The wire feeder of clause 1, wherein the wire guide comprises a plurality of ball bearings.
Clause 5. The wire feeder of clause 1, wherein the wire feeder is configured to receive 1/8 inch wire from the wire source.
Clause 6. A portable welding wire spool housing comprising:
   a first case;
   a spool support within the case, the spool support configured to support a spool of welding wire and to enable the spool to rotate to pay out the welding wire from the spool;
   an outlet to enable welding wire to be withdrawn from the first case by a portable wire feeder physically independent of the wire spool housing; and
   a wire guide configured to guide welding wire from a welding wire spool supported on the spool support to the outlet.
Clause 7. The portable welding wire spool housing of clause 6, wherein the outlet comprises a connector configured to connect to the portable wire feeder.
Clause 8. The portable welding wire spool housing of clause 7, wherein the connector is configured to connect to the portable wire feeder via a conduit.
Clause 9. The portable welding wire spool housing of clause 7, wherein the connector is configured to directly connect to the second case.
Clause 10. The portable welding wire spool housing of clause 6, wherein the spool support is configured to support a sixty pound spool of welding wire.
Clause 11. The portable welding wire spool housing of clause 6, wherein the wire guide is configured to guide 1/8 inch wire.
Clause 12. The portable welding wire spool housing of clause 6, wherein the wire guide comprises a plurality of ball bearings.
Clause 13. The portable welding wire spool housing of clause 6, wherein the case includes a plurality of wheels.
Clause 14. The portable welding wire spool housing of clause 6, wherein the first case does not include a motor.
Clause 15. A wire feeding system comprising:
   a wire source housing comprising:
      a first case;
      a spool support within the case configured to support a welding wire spool;
      a first connector; and
      a first wire guide configured to guide welding wire from a welding wire spool supported on the spool support to the connector; and
   a wire feeder comprising:
      a second case;
      a second connector configured to connect to the first connector; and
      one or more drive rolls within the case, the one or more drive rolls configured to drive wire to a welding torch; and
      a second wire guide configured to guide welding wire received from the wire source housing via the second connector to the one or more drive rolls.
Clause 16. The wire feeding system of clause 15, wherein the first wire guide and the second wire guide are configured to guide 1/8 inch wire.
Clause 17. The wire feeding system of clause 15, wherein the first connector is configured to directly connect to the second connector.
Clause 18. The wire feeding system of clause 15, wherein each of the first wire guide and the second wire guide comprise a plurality of ball bearings.
Clause 19. The wire feeding system of clause 15, wherein the wire source housing comprises a plurality of wheels.
Clause 20. The wire feeding system of clause 15, wherein the spool support is configured to support a sixty pound spool of wire.

## Claims

1. A portable wire feeder comprising:
a first case;
a connector configured to connect to a second case of a wire source, wherein the second case is physically independent from the first case;
one or more drive rolls within the first case, the one or more drive rolls configured to drive wire to a welding torch; and
a wire guide configured to guide wire received from the wire source via the connector to the one or more drive rolls.

2. The wire feeder of claim 1, wherein the connector is configured to connect to the second case via a conduit, or wherein the connector is configured to directly connect to the second case.

3. The wire feeder of claim 1, wherein the wire feeder is configured to receive 1/8 inch wire from the wire source.

4. A portable welding wire spool housing comprising:
a first case;
a spool support within the case, the spool support configured to support a spool of welding wire and to enable the spool to rotate to pay out the welding wire from the spool;
an outlet to enable welding wire to be withdrawn from the first case by a portable wire feeder physically independent of the wire spool housing; and
a wire guide configured to guide welding wire from a welding wire spool supported on the spool support to the outlet.

5. The portable welding wire spool housing of claim 4, wherein the outlet comprises a connector configured to connect to the portable wire feeder.

6. The portable welding wire spool housing of claim 5, wherein the connector is configured to connect to the portable wire feeder via a conduit, or wherein the connector is configured to directly connect to the second case.

7. The portable welding wire spool housing of claim 4, wherein the wire guide is configured to guide 1/8 inch wire.

8. The wire feeder of claim 1, or the portable welding wire spool housing of claim 4, wherein the wire guide comprises a plurality of ball bearings.

9. The portable welding wire spool housing of claim 4, wherein the first case includes a plurality of wheels, or wherein the first case does not include a motor.

10. A wire feeding system comprising:
a wire source housing comprising:
a first case;
a spool support within the case configured to support a welding wire spool;
a first connector; and
a first wire guide configured to guide welding wire from a welding wire spool supported on the spool support to the connector; and
a wire feeder comprising:
a second case;
a second connector configured to connect to the first connector; and
one or more drive rolls within the case, the one or more drive rolls configured to drive wire to a welding torch; and
a second wire guide configured to guide welding wire received from the wire source housing via the second connector to the one or more drive rolls.

11. The wire feeding system of claim 10, wherein the first wire guide and the second wire guide are configured to guide 1/8 inch wire.

12. The wire feeding system of claim 10, wherein the first connector is configured to directly connect to the second connector.

13. The wire feeding system of claim 10, wherein each of the first wire guide and the second wire guide comprise a plurality of ball bearings.

14. The wire feeding system of claim 10, wherein the wire source housing comprises a plurality of wheels.

15. The portable welding wire spool housing of claim 4, or the wire feeding system of claim 10, wherein the spool support is configured to support a sixty pound spool of wire.
